# EUROPEAN PATENT SPECIFICATION

(11) **EP 4 165 568 B1**
(45) Date of publication and mention of the grant of the patent: **29.07.2026**
(21) Application number: 21731803.9
(22) Date of filing: 11.06.2021
(51) Int. Cl.: G06Q 10/06, G06Q 50/02, A01B 79/00

(54) **METHOD FOR CONTROLLING ACTIONS OF A MOBILE ENTITY ON A FIELD MANAGEMENT UNIT**
VERFAHREN ZUR STEUERUNG VON AKTIONEN EINER MOBILEN EINHEIT AUF EINER ACKERVERWALTUNGSEINHEIT
PROCÉDÉ DE COMMANDE DES ACTIONS D'UNE ENTITÉ MOBILE SUR UNE UNITÉ DE GESTION DE CHAMP

(30) Priority: 11.06.2020 EP 20179426; 11.06.2020 EP 20179418; 11.06.2020 EP 20179419
(43) Date of publication of application: 19.04.2023
(73) Proprietor: KWS SAAT SE & Co. KGaA, 37574 Einbeck (DE)
(72) Inventor: SCHEUERMANN, Enrico B., 37574 Dassensen (DE); RATKE, Christoph, 37181 Hardegsen (DE); WRAY, Christopher, 37574 Einbeck (DE); QUANTMEYER, Christian, 37581 Bad Gandersheim (DE); STOFFREGEN, Jan-Patrick, 31079 Sibbesse (DE)
(74) Representative: Eisenführ Speiser
(86) International application number: PCT/EP2021/065812
(87) International publication number: WO 2021/250249

(56) References cited:
- WO-A2-2014/036281
- US-A1- 2012 109 614

## Description

The invention relates to a method for controlling actions of a mobile entity on a field management unit, a mobile entity, and a system for controlling actions of a mobile entity on a field management unit. Further, the invention relates to a computer program product and the use of a method for preventing adverse agricultural interventions.

In the management of agricultural land, typically operators and/or agricultural machines are used to carry out actions, in particular as part of agricultural processes such as seed and/or plant production and/or breeding and/or phenotyping and/or variety development. Actions carried out by the operators and/or the agricultural machines can for example include moving through a field management unit, and/or applying a substance such as a plant protection product on a field management unit, and/or placing plant material in a field management unit.

For example WO2014036281A2 discloses a method for generating agricultural input recommendations, which involves providing indications of localized usage context with acceptable and target yields, and probability of achieving target yield is determined based on localized usage context.

Existing solutions, however, have the drawback that in the field management units, operators and/or agricultural machines often also carry out actions that cause unwanted events that can result in negative effects on the planned agricultural processes. Such unwanted events can for example be unwanted cross-pollination of plants in a field management unit, in particular induced by an operator and/or an agricultural machine, or application of a wrong substance to a field management unit. Such unwanted events can for example lead to contamination and/or impurity of plants in a field management unit which thus cannot be used further in the planned agricultural processes and need to be replaced.

To avoid unwanted events such as for example unwanted cross-pollination different solutions are known. WO 2009/124282 A1 describes a method to make transgenic pollen malfunction and thus blocking or reducing genetically modified organism (GMO) pollen flow to avoid or reduce unwanted cross-pollination with GMO pollen. US 10,905,060 B2 and US 10,398,009 B2 describe methods for on-demand pollination, wherein timed intentional application of pollen is carried out at a time when the female plants to be pollinated are in a state when the female components of the plants are ready to receive pollen. WO 1999055143 A1 describes the possibility of making plants, which are naturally self-fertilizing and have flowers, which are unattractive for pollinating insects. The known methods are in particular directed to influence the pollination process either by defined application of pollen or by modifying the pollination behaviour of plants. However, these methods are associated with high effort and cannot avoid other unwanted events, in particular such unwanted events that are induced by an action of an operator and/or an agricultural machine.

It is an object of the present invention to provide an improved method for controlling actions of a mobile entity on a field management unit, and/or to provide an improved mobile entity, and/or to provide an improved system for controlling actions of a mobile entity on a field management unit. In particular, it is an object of the present invention to provide a solution for reliably avoiding unwanted events in agricultural processes.

According to a first aspect, it is provided a method for controlling actions of a mobile entity on a field management unit, comprising providing a database that is provided on a server, wherein georeferenced boundaries of field management units are stored in the database, providing an assessment unit, comprising a processor, determining a current position of a mobile entity by using a global navigation satellite system (GNSS) receiver for establishing a position of the mobile entity, determining, by the assessment unit, a current field management unit, in which the mobile entity is located, based on the current position of the mobile entity and based on the georeferenced boundaries of the field management units stored in the database, determining, by the assessment unit, one or more adjacent field management units, which are arranged adjacent to the current field management unit, based on the current position of the mobile entity and/or on the current field management unit and based on the georeferenced boundaries of the field management units stored in the database, wherein at least one of the following characteristics of the mobile entity is stored in the database: previous positions of the mobile entity and/or previous field management units, in which the mobile entity was located, agricultural interventions that can be carried out by the mobile entity, wherein the agricultural interventions that can be carried out by the mobile entity include agricultural interventions that are dependent on the previous positions and/or previous field management units, wherein at least the following information of the current field management unit and of at least one adjacent field management unit, preferably of all field management units, is stored in the database: status information of the field management unit, and at least one of the following: required agricultural interventions, adverse agricultural interventions, carrying out an assessment, by the assessment unit, by assessing whether a) the mobile entity is adapted to carry out a required agricultural intervention of the current field management unit and/or of an adjacent field management unit, and/or b) the mobile entity is adapted to carry out an adverse agricultural intervention of the current field management unit and/or of an adjacent field management unit, by comparing at least one of the stored characteristics of the mobile entity with the information of the current field management unit and/or of an adjacent field management unit, generating a data signal based on the assessment by the assessment unit.

Herein, a database is preferably be understood as an organized collection of data, generally stored and accessed electronically from a computer system. Preferably, the database may be part of a database system comprising one or more further databases. Further, the server can comprise one or more sub servers and/or be part of a server landscape with several servers and/or sub servers.

Georeferenced boundaries of field management units are stored in the database. A field management, as understood herein, and as will be described also further below, can be an agricultural field management unit or a non-agricultural field management unit. Agricultural field management units and non-agricultural field management units can be arranged in any possible combinations. For example it is possible that several agricultural field management units are located next to each other or that an agricultural field management unit is located in between at least one non-agricultural field management unit. Field management units, as understood herein, can comprise any combination of agricultural field management units and non-agricultural field management units (i.e. agricultural field management units and/or non-agricultural field management units). In particular, it is also possible that several field management units only comprise agricultural field management units.

In managing agricultural processes, the geographical location of plant material is important. For example, in plant production, in particular hybrid plant production, plant line and/or variety development, plant material is located in fields. Herein, such fields are referred to as agricultural field management units.

Non-agricultural field management units can be understood to be areas that are not used for agricultural purposes and/or in which no agricultural processes are carried out. Non-agricultural field management units can for example comprise roads, and/or streets, and/or buildings for farming, and/or buildings for industry.

Between two agricultural field management units, one or more non-agricultural field management units can be located, wherein for example these two agricultural field management units can be distanced by a small distance, such as for example several meters, or by a large distance, such as for example several kilometres.

A field management unit can be created by defining georeferenced boundaries thereof. This can be done, for example, using a geographic information system (GIS). A GIS can be understood as a system designed to capture, store, manipulate, analyse, manage and/or present a variety of types of spatial and/or geographical data with georeferenced coordinates, in particular latitude and longitude. The boundaries of a field management unit preferably are in the form of the borderlines of a field, which preferably form one circumferentially closed line enclosing the field management unit therein. The geographical location of these boundaries can be stored in the database, for example as a polygon or in the form of connected point coordinates.

A field management unit can have different coordinates that define the boundaries of the field management unit. For example a field management unit can be defined by 2-dimensional coordinates that define the field management unit by boundaries on the ground. However, preferably the air above and/or ground below such a 2-dimensional defined field management unit is also part of the field management unit. A field management unit can also be defined by defining boundaries with 3-dimensional coordinates. In particular all plants on a field management unit are part of the field management unit.

A field management unit can comprise several field management sub-units. A field management sub-unit can comprise one or several of the following group: block, plot, stripe, row, sowing line, point location. The field management sub-units can also be understood as smaller areas, which subdivide a larger field management unit. For example, also a hierarchy of field management sub-units within a field management unit can exist.

In particular, the solution described herein is suitable for field management units, in particular field management sub-units, with a relatively small size as used in pre-breeding, breeding and/or plant line, plant population and plant variety development. For these smaller sized field management units, in particular field management sub-units, and the specific requirements of pre-breeding, breeding and/or plant line, plant population or plant variety development, a particularly high accuracy of position data is necessary. For example, different varieties may be placed in small field management sub-units close to each other. In particular, for application areas like pre-breeding, breeding and/or plant line, plant population or plant variety development, it is important to manage agricultural processes on different field management sub-units individually. Thus, exact position data is necessary to differentiate between the individual small field management sub-units and the different lines, populations or varieties placed therein. In particular pre-breeding, breeding and/or plant line, plant population or plant variety development applications, it can even be desirable to differentiate field management sub-units in the form of point coordinates and/or individual plant material, such as, but not limited to, individual seeds and/or individual plants.

Herein, such a small field management sub-unit may also be referred to as a breeding plot or research plot. Preferably, a field management sub-unit, in particular a breeding plot or research plot, has an essentially rectangular shape with an edge length on its larger edge of max. 15 m, or max. 12 m, or max. 10 m, or max. 7.5 m, or max. 5 m, or max. 3 m, or max. 1.5 m, or max. 1.25 m. Preferably, a field management sub-unit, in particular a breeding plot, has an edge length on its shorter edge of max. 3 m, or max. 2 m, or max. 1.5 m, or max. 1.35 m, or max. 1.25 m.

Non-limiting examples of sizes of a field management sub-unit, in particular a breeding plot, are: 3 m x 10 m, e.g. for maize; 1.35 m x 7,5 m, e.g. for Beta vulgaris; 1.25 m x 1 m, e.g. for cereals like wheat, rye or barley.

A mobile entity, as described herein, can preferably be designed in different ways. A mobile entity can for example comprise and/or consist of one of the following group: an unmanned vehicle, in particular unmanned aerial vehicle and/or unmanned ground-borne vehicle, a smartphone, a tablet, a wearable sensor, an agricultural machine, in particular a tractor and/or applicator of substances.

Preferably, the position of the mobile entity can be determined by means of global navigation satellite system. Preferably, the mobile entity has a receiver that is adapted for receiving global navigation satellite system information for determining the position of the mobile entity.

The assessment unit comprises a processor, preferably comprising a central processing unit (CPU) and/or a graphics processing unit (GPU), and/or a microprocessor. Preferably, the assessment unit is located at the server and/or is part of the server. The assessment unit can be located at the mobile entity, wherein preferably the assessment unit is arranged on the mobile entity. However, it is also possible that the assessment unit can be located distanced to the server and/or distanced to the mobile entity. In particular, the assessment unit can be distributed, wherein a first part of the assessment unit is arranged at the mobile entity and/or at the server and/or distanced to the mobile entity, and a second part of the assessment unit is arranged distanced to the first mobile entity.

Actions of the mobile entity can for example comprise introducing at least one substance to a field management unit. Substances introduced to a field management unit can comprise or consist of any substance that is planned to be applied on the field management unit, such as for example but not limited to fertilizer and/or plant protection products and/or comprise or consist of any substance that is not planned to be applied on the field management unit, in particular which can be detrimental for an agricultural process, such as for example but not limited to external pollen and/or substances that can cause a contamination of plants in the field management unit.

A mobile entity preferably comprises one or several of the following group: a (smart) phone, a tablet, a mobile computer, a wearable computer, in particular a smartwatch and/or hands free device, such as smart glasses, a manned vehicle (e.g. quad bike or other), an unmanned autonomous vehicle, in particular ground-borne and/or air-borne, for example a field robot and/or a drone, an agricultural machine, such as a tractor and/or a planter and/or a harvester and/or a sprayer, a helicopter, an airplane. Preferably, a mobile entity can for example be referred to a mobile device such as for example a handheld computer, in particular a (smart) phone and/or a tablet.

The current position of the mobile entity is preferably understood to be the position in which the mobile entity is located at the time of the positioning of the mobile entity. The current field management unit is preferably understood to be the field management unit, in which the mobile entity is located at the time of the positioning of the mobile entity. The current field management unit can be determined based on the georeferenced boundaries of the field management units and on the current position of the mobile entity. From the information of the current position of the mobile entity and the georeferenced boundaries of the field management unit, it can be determined the current position of the mobile entity.

An adjacent field management unit can preferably be understood as a field management unit that is arranged next to and/or neighbouring to the current field management unit. In particular an adjacent field management unit can be arranged adjoining to the current field management unit. A current field management unit can have one or more adjacent field management units. In particular, several adjacent field management units can be arranged adjoining to the current field management unit.

The GNSS receiver preferably is adapted to connect to a global navigation satellite system and receive position data therefrom. Preferably, the GNSS receiver is adapted to connect to two or more different systems, preferably to systems such as GPS and/or GLONASS and/or Galileo and/or BeiDou and/or further global navigation satellite systems. This is a particular advantage over existing solutions, which are bound to a single GNSS system.

A previous position, as understood herein, can be understood as a position in which the mobile entity was located at a previous positioning of the mobile entity. The previous field management unit is preferably understood to be the field management unit, in which the mobile entity was located at the time of a positioning of the mobile entity. In particular, every current field management unit becomes a previous field management unit as a new current field management unit is determined. Thus, a previous field management unit preferably has been determined as a current field management unit is the past.

Previous positions of the mobile entity in particular refer to positions of the mobile entity, in which the mobile entity was previously located. In particular, it can be understood that every current position of the mobile entity becomes a previous position of the mobile entity when the mobile entity moves further to a new current position. These previous positions can be stored in the database.

In the database, at least one characteristics of the mobile entity is stored. Characteristics of the mobile entity can be understood as for example previous positions of the mobile entity and/or of the previous field management units, and/or agricultural interventions that can be carried out by the mobile entity. Preferably, characteristics of the mobile entity is used for a comparison within the assessment of the assessment unit.

In the assessment, carried out by the assessment unit, it is assessed whether the mobile entity is adapted to carry out a required agricultural intervention and/or an adverse agricultural intervention. Therefore, it is preferably compared at least one stored characteristic of the mobile entity with information of a field management unit. Agricultural interventions can preferably understood to be interferences to a field management unit, in particular interferences that have an effect on a field management unit, in particular on plants in a field management unit. Preferably, required agricultural interventions are interventions that are required for agricultural processes planned for a field management unit. Further, preferably, adverse agricultural interventions are interventions that are detrimental for agricultural processes planned for a field management unit.

In the database, status information of a field management unit can be stored. Status information can for example comprise information on genetics of plants and/or seeds in the field management unit, and/or current status of plants and/or seeds in a field management unit such as for example blooming status or other information.

Preferably, generating a data signal is carried out dependent on the assessment. In particular, the data signal is send to the mobile entity. Preferably, the data signal comprises at least one instruction and/or at least one warning message for the mobile entity.

The solution described herein has the advantage that adverse agricultural interventions induced by a mobile entity can be avoided in a reliable and cost efficient way, by using information stored information with respect to the mobile entity, such as previous positions of the mobile entity. Thus, in particular seeds and plants can reliably be protected from unwanted cross-pollination and/or contamination.

A further advantage is that required agricultural interventions can reliably be carried out, in particular by the mobile entity. Thus, agricultural processes in field management units can be optimized. For example watering or weeding can be carried out as planned and/or as required by the field management unit by carrying out the assessment and using information with respect to the mobile entity therein.

A further advantage is that with the method described herein, the mobile entity can also be used for warning an operator and thus to avoid adverse agricultural interventions. By using warning messages and/or signals on the mobile device, adverse agricultural interventions can be reduced or even completely avoided. Hence, the agricultural processes can be improved.

According to a preferred embodiment, the method comprises carrying out an action, dependent on the generated data signal, with the mobile entity by using a control unit of the mobile entity, wherein preferably the control unit of the mobile entity is arranged on the mobile entity.

Preferably, carrying out an action comprises one or more actions for agricultural processes. The action carried out is preferably planned in advance, in particular dependent on required agricultural interventions within an agricultural process.

Agricultural processes, as understood herein, can comprise one or several of the following group: placing planting material, such as, but not limited to sowing seeds and/or placing of young plants and/or cuttings and/or bulbs and/or tubers and/or grafts, transplanting planting material, such as, but not limited to young plants and/or cuttings and/or bulbs and/or tubers and/or grafts, singling planting material, such as, but not limited to young plants and/or cuttings and/or bulbs and/or tubers and/or grafts, topping planting material, such as, but not limited to young plants and/or cuttings and/or bulbs and/or tubers and/or grafts, collecting plant samples, harvesting, inspecting, emasculating, pollination, sampling for genotyping or ingredient analysis, treatment with chemicals and/or fertilizer and/or irrigation, weeding, in particular mechanical weeding, phenotyping.

Preferably, such agricultural processes are planned in advance in a process of managing such agricultural processes, The process of managing such agricultural processes can comprise one or several of the following group: planning, administrating, performing maintenance work, inspecting, monitoring, documenting, analysing, evaluating, visualizing.

Preferably, the control unit is connected to the mobile entity and/or positioned on the mobile entity and/or part of the mobile entity.

According to a preferred embodiment, the status information of the field management unit comprises at least one of the following: genetics of at least one plant material that is arranged in the field management unit, blooming status of at least one plant material that is arranged in the field management unit.

The status information of the field management unit can comprise several different information that are relevant for the current status of the field management unit. Genetics of at least one plant material that is arranged in the field management unit can preferably be understood as plant genetics and/or plant species of the plant material in the field management unit.

The status information of the field management unit can for example comprise information on the status of the soil in the field management unit and/or on the watering state of the soil and/or of plants in the field management unit.
the blooming status preferably comprises information on if the plants in the field management unit are currently blooming or not, and in particular when a blooming of the plants is expected or not expected.

In a preferred embodiment, the global navigation satellite system (GNSS) receiver is arranged on the mobile entity.

The GNSS receiver can be connected to the mobile entity and/or be part of the mobile entity. Preferably, the GNSS receiver is adapted to receive positioning data for determining the position of the mobile entity. The GNSS receiver can comprise an antenna such as a multiband antenna for precise positioning. The GNSS receiver can for example be a built-in GNSS receiver in a mobile entity, for example a GPS receiver in a mobile handheld device. A built-in GNSS receiver offers the advantage of a cost efficient positioning.

In a further preferred embodiment, the georeferenced boundaries of the current field management unit comprise at least one common point with the georeferenced boundaries of the one or more adjacent field management units.

Preferably, the georeferenced boundaries of the current field management unit and the georeferenced boundaries of an adjacent field management comprise one common point and/or at least one common line and/or at least a common part of their outer boundaries. For example in case of two neighbouring field management units, these field management units can have one common line, wherein in particular the georeferenced coordinates of the common line is identical for both georeferenced field management unit.

The current field management unit can comprise at least one common point with more than one adjacent field management unit. In particular, the current field management unit can comprise at least one common point with a first adjacent field management unit and at least one common point with a second adjacent field management unit, and preferably at least one common point with one or more further adjacent field management units.

According to a preferred embodiment, the mobile entity comprises a carrier platform, and/or wherein the mobile entity and/or the carrier platform comprises or consists of at least one of the following group: an unmanned vehicle, in particular unmanned aerial vehicle and/or unmanned ground-borne vehicle, a smartphone, a tablet, a wearable sensor, an agricultural machine, in particular a tractor and/or applicator of substances.

Preferably, the carrier platform is a platform for carrying persons and/or material and/or substances and/or plant material and/or sensors. Preferably, the carrier platform can be, in particular detachably, connected to the mobile entity.

A wearable sensor, as understood herein, is preferably a sensor that can be worn by a person, for example on the person's clothes.

An unmanned vehicle is preferably understood as a vehicle without a person on board that can either be a remote controlled or a remote guided vehicle, or an autonomous vehicle which is capable of sensing its environment and navigating on its own. An unmanned ground-borne vehicle can for example be a field robot, in particular a field robot that is adapted to carry out agricultural tasks within a field management unit. An unmanned aerial vehicle can for example be a drone, in particular a drone that is adapted to carry out agricultural tasks in a field management unit, for example applying substances in a field management unit or taking photographs of a field management unit. An applicator of substances is preferably understood as an agricultural machine that is adapted to apply substances in a field management unit.

According to a further preferred embodiment, the method comprises storing, in the database, previous positions of the mobile entity, and/or storing, in the database, field management units, in which the mobile entity was previously located.

Previous positions of the mobile entity are preferably positions of the mobile entity, in which the mobile entity was located before being positioned in the current position. Preferably, in the database, with the previous positions of the mobile entity a history of previous positions of the mobile entity is stored. Previous positions of the mobile entity can also comprise the current position of the mobile entity.

Storing previous positions of the mobile entity and/or storing field management units in which the mobile entity was located has the advantage that it know in which field management units the mobile entity was located before. With the information on previous positions of the mobile entity, it is possible to decide in which field management units the mobile entity can enter and/or move.

It is preferred that if the mobile entity moves from the current field management unit further to another field management unit, the field management unit in which the mobile entity is then located becomes the current field management unit and the field management unit that was the current field management unit is stored in the database as previous field management unit.

Preferably, in addition further information is stored in the database, such as for example if plants in the field management unit are blooming and if plants in the field management unit have been fertilized, in particular when the plants have been fertilized.

According to a further preferred embodiment, the method comprises storing, in the database, previous positions of the carrier platform, and/or storing, in the database, field management units, in which the carrier platform was previously located.

Previous positions of the carrier platform are preferably positions of the carrier platform, in which the carrier platform was located before being positioned in the current position of the carrier platform. Preferably, in the database, with the previous positions of the carrier platform a history of previous positions of the carrier platform is stored. Previous positions of the carrier platform can also comprise the current position of the carrier platform.

Storing previous positions of the carrier platform and/or storing field management units in which the carrier platform was located has the advantage that it is known in which field management units the carrier platform was located before. With the information on previous positions of the carrier platform, it is possible to decide in which field management units the carrier platform can enter and/or move.

It is particularly preferred if both previous positions of the mobile entity and previous positions of the carrier platform are stored in the database. By storing both previous positions of the mobile entity and previous positions of the carrier platform it is possible to decide, based on this information, if either of the mobile entity or the carrier platform or both can carry out an action, in particular be moved and/or enter, in a particular field management unit. Thus, it is for example possible to choose a particular combination of carrier platform and mobile entity, which is suitable for carrying out an action in a particular field management unit.

According to a further preferred embodiment, the assessment comprises, dependent on: the adverse agricultural interventions of one of the adjacent field management units, and the previous positions of the mobile entity and/or the carrier platform and/or the field management units, in which the mobile entity and/or the carrier platform was previously located, whether it is allowable for the mobile entity and/or the carrier platform to enter the adjacent field, wherein preferably in the assessment previous positions of the mobile entity and/or the carrier platform within a predetermined past period of time, in particular within the last 24 hours, are included in the assessment.

Preferably, in the assessment adverse agricultural interventions and previous positions of the mobile entity and/or of the carrier platform are compared to determine if the mobile entity and/or the carrier platform can enter a particular field management unit. In particular this depends on the adverse agricultural interventions that are linked to the field management unit that shall be entered. It is preferred if previous positions of the mobile entity and/or of the carrier platform from the previous 48 hours, in particular from the previous 24 hours, are considered in the assessment. Preferably, the predetermined past period of time can be determined and/or changed and/or stored in the database.

According to a further preferred embodiment, the method comprises neutralising at least one previous position of the mobile entity and/or the carrier platform dependent on the presence of a neutralising event, wherein preferably in the assessment neutralised previous positions of the mobile entity and/or the carrier platform are not considered in the assessment, wherein preferably the neutralising event comprises cleaning the mobile entity and/or the carrier platform.

It is preferable if in the assessment particular previous positions that can be identified as neutralised. A previous position can preferably be neutralised as a result of a neutralising event. Such a neutralising event can for example comprise removing dirt and/or pollen and/or particles from the mobile entity and/or from the carrier platform, in particular by cleaning the mobile entity and/or the carrier platform. If for example a mobile entity and/or a carrier platform moved through a field management unit in which it could have absorbed particular pollen or particles that should not be introduced to another field management unit, it can be possible to neutralise this previous position by subsequently cleaning the mobile entity and/or the carrier platform. Thus, particles and/or pollen and/or dirt can be removed from the mobile entity and/or the carrier platform and the mobile entity and/or carrier platform can be moved into the field management unit without causing unwanted cross-pollination and/or unwanted contamination.

According to a further preferred embodiment, that the method comprises if an adverse agricultural intervention is caused by the mobile entity and/or the carrier platform, storing, in the database, an occurrence and/or a timestamp of the adverse agricultural intervention.

It is preferred if for each adverse agricultural intervention that occurs in a field management unit, this adverse agricultural intervention is stored in the database by storing the adverse agricultural intervention and in particular the time of the occurrence of the adverse agricultural intervention. A timestamp preferably is understood as a sequence of characters or encoded information identifying when a certain event occurred, in particular comprising date and time of day.

In a further preferred embodiment, required agricultural interventions of the current field management unit and/or at least one of the adjacent field management units and/or adverse agricultural interventions of the current field management unit and/or at least one of the adjacent field management units comprise at least one of the following group: introducing at least one substance to the field management unit, wherein preferably the substance comprises at least one of the following group: pollen, water, plant protection product, fertilizer, plant material, weeds, amending at least one plant condition and/or at least one soil condition, wherein preferably amending the at least one plant condition and/or at least one soil condition comprises at least one of the following group: tilling, harvesting, grubbing.

Preferably, for each field management unit individual adverse agricultural interventions and required agricultural interventions can be defined and stored in the database.

In a further preferred embodiment, the mobile entity comprises an applicator of substances which comprises a first container and preferably a second container, wherein preferably, dependent on the generated data signal, the first container is locked and/or the second container is locked.

Preferably, with an applicator of the mobile entity, one or more substances can be applied to a field management unit. In particular, such an applicator can be adapted to spray and/or drop and/or sprinkle a substance such as for example water and/or fertilizer and/or plant protection products and/or pollen and/or seeds in a field management unit.

The first container preferably comprises a first substance. The second container preferably comprises a second substance. The first container and the second container can comprise different or identical substances. The first container is preferably adapted to hold the first substance within the first container. The second container is preferably adapted to hold the second substance within the second. It is preferred if the first container and/or the second container comprises or consists of plastic. The first container preferably comprises a, in particular controllable, valve which can be opened to apply at least a part of, in particular a defined amount of, the first substance from the first container to a field management unit. The second container preferably comprises a, in particular controllable, valve, which can be opened to apply at least a part of, in particular a defined amount of, the second substance from the second container to a field management unit.

The generated data signal can preferably be used for controlling a sprayer and/or a sprayer boom and/or a distributor for distributing substances on plants or the like. At this sprayer and/or sprayer boom and/or distributor preferably at least two tanks, e.g. with two different herbicides, are arranged. Depending on the field management unit characteristics and/or on the genetics of the plants in the field management unit, one tank can for example be switched off, in particular be locked, so that application of the contents from this tank is not possible. This is particularly advantageous as mistreatment with for example herbicides which often leads to the loss of a plot can be avoided.

Preferably the control unit is adapted to control the application of one or more substances by controlling the applicator, in particular by controlling the valve of the fist container and/or the valve of the second container.

In particular such an application of substances is understood to be an action that can be carried out by the control unit.

According to a further preferred embodiment, required agricultural interventions of the current field management unit and/or required agricultural interventions of at least one of the adjacent field management units comprise at least one of the following group: watering the field management unit, applying a plant protection product, in particular a pesticide and/or a fungicide and/or a herbicide, in the field management unit, tillage operations in the field management unit, harvesting in the field management unit, planting plant material in the field management unit.

Preferably, the required agricultural interventions are stored in the database. In particular, required agricultural interventions can be stored for each field management unit individually, dependent on the requirements of the field management unit. Thus, the requirements of the different field management units can be different. For example it is possible that for one field management unit it can be required that a particular pesticide has to be applied to the field management unit (this means that this is a required agricultural intervention) and for another field management unit the application of this pesticide is not allowed or even detrimental (this means that for this field management unit it is an adverse agricultural intervention).

Preferably, watering the field management unit can be further defined by the required amount of water per time in the field management unit. Tillage operations are preferably understood as soil cultivation and/or working the soil for example by plowing and/or digging up soil in the field management unit.

According to a further preferred embodiment, adverse agricultural interventions of the current field management unit and/or adverse agricultural interventions of at least one of the adjacent field management units comprises at least one of the following group: watering the management unit, applying a plant protection product, in particular pesticide and/or fungicide and/or herbicide, in the field management unit, tillage operations in the field management unit, harvesting in the field management unit, planting plant material in the field management unit, crossing the georeferenced boundaries of the field management unit dependent on previous positions of the mobile entity and/or previous field management units, in which the mobile entity was located, reaching a pre-defined distance between the mobile entity and the georeferenced boundaries of the field management unit, crossing georeferenced boundaries of a no-go area, unwanted cross-pollination, in particular human-induced pollination.

Preferably, the adverse agricultural interventions are stored in the database. In particular, adverse agricultural interventions can be stored for each field management unit individually, dependent on the events to be avoided in each of the field management units.

In particular different warning signals can be shown dependent on the pre-defined distance between the mobile entity and the georeferenced boundaries of the field management unit. Thus, for example a first warning signal can be shown when the mobile entity reaches a determined distance to the pre-determined distance and/or another warning signal can be shown when the mobile entity reaches the pre-determined distance and/or at least one more warning signal can be shown when the mobile entity reaches another pre-determined distance that is smaller than the other pre-determined distance. A warning signal can be emitted, in particular visually and/or acoustically and/or by vibration. In particular a warning signal can be emitted dependent on the distance to a particular field management unit. For example the warning can get louder and/or stronger if the distance between the mobile entity and the field management unit becomes smaller. For example a first warning signal can be emitted if the distance between the mobile entity and the field management unit becomes smaller than or equal to 5 m and/or a second warning signal can be emitted if the distance between the mobile entity and the field management unit becomes smaller than 1 m. Such different warning signals can for example be emitted, in particular by vibration, by a wearable sensor, which can preferably be worn by a person that uses and/or carries the mobile entity.

In particular, it an adverse agricultural intervention can occur if the mobile entity and/or the carrier platform reach a pre-defined distance to a field management unit, in particular an adjacent field management unit. By such a pre-defined distance it can be set, for a field management unit, a safety distance around the field management unit, in which a mobile entity and/or a carrier platform shall not enter, for example to avoid contamination or unwanted cross-pollination induced by the mobile entity and/or the carrier platform. If the mobile device and/or the carrier platform reaches this safety distance or moves even closer to the field management unit, a data signal can be generated with which an action can be carried out such as changing the moving direction of the mobile entity and/or providing a warning signal.

According to a further aspect, it is provided a mobile entity, comprising a control unit that is adapted to control the mobile entity to carry out an action, dependent on a generated data signal that is determined by the method as described herein.

Preferably, the control unit can control a drive unit of the mobile entity and/or the steering mechanism of the mobile entity. In particular the control unit can control the mobile entity to carry out an action dependent on a required agricultural intervention and/or on an adverse agricultural intervention.

According to a further aspect, it is provided a system for controlling actions of a mobile entity on a field management unit, comprising a database that is provided on a server, wherein georeferenced boundaries of field management units are stored in the database, a mobile entity, a global navigation satellite system (GNSS) receiver for establishing a position of the mobile entity, wherein the global navigation satellite system (GNSS) receiver is adapted to determine a current position of the mobile entity, an assessment unit, comprising a processor, wherein the assessment unit is adapted to determine a current field management unit, in which the mobile entity is located, based on the current position of the mobile entity and based on the georeferenced boundaries of the field management units stored in the database, determine one or more adjacent field management units, which are arranged adjacent to the current field management unit, based on the current position of the mobile entity and/or on the current field management unit and based on the georeferenced boundaries of the field management units stored in the database, wherein at least one of the following characteristics of the mobile entity is stored in the database: previous positions of the mobile entity and/or previous field management units, in which the mobile entity was located, agricultural interventions that can be carried out by the mobile entity, wherein the agricultural interventions that can be carried out by the mobile entity include agricultural interventions that are dependent on the previous positions and/or previous field management units, wherein at least the following information of the current field management unit and of at least one adjacent field management unit, preferably of all field management units, is stored in the database: status information of the field management unit, and at least one of the following: required agricultural interventions, adverse agricultural interventions, wherein the assessment unit is adapted to carry out an assessment by assessing whether a) the mobile entity is adapted to carry out a required agricultural intervention of the current field management unit and/or of an adjacent field management unit, and/or b) the mobile entity is adapted to carry out an adverse agricultural intervention of the current field management unit and/or of an adjacent field management unit, by comparing at least one of the stored characteristics of the mobile entity with the information of the current field management unit and/or of an adjacent field management unit, wherein the assessment unit is adapted to generate a data signal based on the assessment by the assessment unit.

According to a further aspect, it is provided a computer program product comprising instructions, which, when the program is executed by a computer, cause the mobile entity to carry out the method as described herein and to start a required agricultural intervention and/or to stop an adverse agricultural intervention.

According to a further aspect, it is provided a use of the method as described herein for preventing adverse agricultural interventions, in particular human-induced pollination.

Human-induced pollination, in particular human-induced cross-pollination, can be understood as a pollination of plant material in a field management unit, wherein a person brings in pollen to the field management unit and/or to the plant material in the field management unit. The pollen induced by a person can for example adhere to the person's clothes and/or to the mobile entity and/or to the carrier platform. If it is known that in particular fields pollen can adhere to the person's clothes and/or to the mobile entity and/or to the carrier platform, this information can be stored in the database with the previous positions of the mobile entity and/or the carrier platform. By defining that certain (or any kind of) pollen should not be introduced to a particular field management unit, an action can be carried out after an assessment to avoid the presence of an adverse agricultural intervention.

As to the advantages, preferred embodiments and details of the individual different aspects and their preferred embodiments, reference is also made to the corresponding advantages, preferred embodiments and details described with reference to the respective other aspects.

Further advantageous embodiments result from the combination of individual, several or all of the preferred features described herein.

Preferred embodiments shall now be described with reference to the attached drawings, in which
- Fig. 1:: shows a schematic representation of an example of a method for controlling actions of a mobile entity on a field management unit;
- Fig. 2: shows another schematic representation of an example of a method for controlling actions of a mobile entity on a field management unit.
- Fig. 3:: shows a schematic representation of an example of a display with two field management units and a drone;
- Fig. 4:: shows a schematic representation of an example of a warning signal for carrying out a method as described herein;
- Fig. 5:: shows a schematic representation of an example of a tractor and a carrier platform with an applicator of substances;

In the figures, elements with the same or comparable functions are indicated with the same reference numerals.

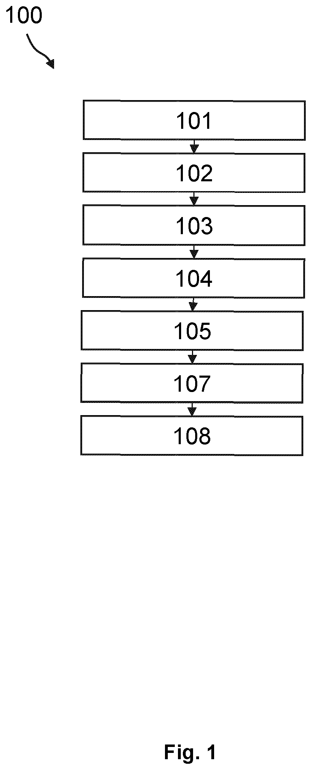

Fig. 1 shows a schematic representation of an example of a method 100 for controlling actions of a mobile entity on a field management unit, wherein the method comprises the following steps. In a step 101, providing a database that is provided on a server, wherein georeferenced boundaries of field management units are stored in the database. In a step 102, providing an assessment unit, comprising a processor. In a step 103, determining a current position of a mobile entity by using a global navigation satellite system (GNSS) receiver for establishing a position of the mobile entity. In a step 104, determining, by the assessment unit, a current field management unit, in which the mobile entity is located, based on the current position of the mobile entity and based on the georeferenced boundaries of the field management units stored in the database. In a step 105, determining, by the assessment unit, one or more adjacent field management units, which are arranged adjacent to the current field management unit, based on the current position of the mobile entity and/or on the current field management unit and based on the georeferenced boundaries of the field management units stored in the database, wherein at least one of the following characteristics of the mobile entity is stored in the database: previous positions of the mobile entity and/or previous field management units, in which the mobile entity was located, agricultural interventions that can be carried out by the mobile entity, wherein the agricultural interventions that can be carried out by the mobile entity include agricultural interventions that are dependent on the previous positions and/or previous field management units, wherein at least the following information of the current field management unit and of at least one adjacent field management unit, preferably of all field management units, is stored in the database: status information of the field management unit, and at least one of the following: required agricultural interventions, adverse agricultural interventions. In a step 107, carrying out an assessment, by the assessment unit, by assessing whether a) the mobile entity is adapted to carry out a required agricultural intervention of the current field management unit and/or of an adjacent field management unit, and/or b) the mobile entity is adapted to carry out an adverse agricultural intervention of the current field management unit and/or of an adjacent field management unit, by comparing at least one of the stored characteristics of the mobile entity with the information of the current field management unit and/or of an adjacent field management unit. In a step 108, generating a data signal based on the assessment by the assessment unit.

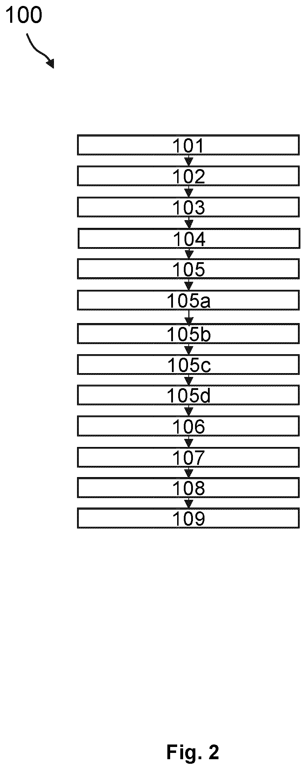

Fig. 2 shows another schematic representation of an example of a method for controlling actions of a mobile entity on a field management unit. The method comprises the following steps. In a step 101, providing a database that is provided on a server, wherein georeferenced boundaries of field management units are stored in the database. In a step 102, providing an assessment unit, comprising a processor. In a step 103, determining a current position of a mobile entity by using a global navigation satellite system (GNSS) receiver for establishing a position of the mobile entity. In a step 104, determining, by the assessment unit, a current field management unit, in which the mobile entity is located, based on the current position of the mobile entity and based on the georeferenced boundaries of the field management units stored in the database. In a step 105, determining, by the assessment unit, one or more adjacent field management units, which are arranged adjacent to the current field management unit, based on the current position of the mobile entity and/or on the current field management unit and based on the georeferenced boundaries of the field management units stored in the database, wherein at least one of the following characteristics of the mobile entity is stored in the database: previous positions of the mobile entity and/or previous field management units, in which the mobile entity was located, agricultural interventions that can be carried out by the mobile entity, wherein the agricultural interventions that can be carried out by the mobile entity include agricultural interventions that are dependent on the previous positions and/or previous field management units, wherein at least the following information of the current field management unit and of at least one adjacent field management unit, preferably of all field management units, is stored in the database: status information of the field management unit, and at least one of the following: required agricultural interventions, adverse agricultural interventions.

In a step 105a storing, in the database, previous positions of the mobile entity. In a step 105b, storing, in the database, field management units, in which the mobile entity was previously located. In a step 105c, storing, in the database, previous positions of the carrier platform. In a step 105d, storing, in the database, field management units, in which the carrier platform was previously located. In a step 106, neutralising at least one previous position of the mobile entity and/or the carrier platform dependent on the presence of a neutralising event, wherein in the assessment neutralised previous positions of the mobile entity and/or the carrier platform are not considered in the assessment, wherein the neutralising event comprises cleaning the mobile entity and/or the carrier platform.

In a step 107, carrying out an assessment, by the assessment unit, by assessing whether a) the mobile entity is adapted to carry out a required agricultural intervention of the current field management unit and/or of an adjacent field management unit, and/or b) the mobile entity is adapted to carry out an adverse agricultural intervention of the current field management unit and/or of an adjacent field management unit, by comparing at least one of the stored characteristics of the mobile entity with the information of the current field management unit and/or of an adjacent field management unit.

In a step 108, generating a data signal based on the assessment by the assessment unit. In a step 109, carrying out an action, dependent on the generated data signal, with the mobile entity by using a control unit of the mobile entity, wherein the control unit of the mobile entity is arranged on the mobile entity.

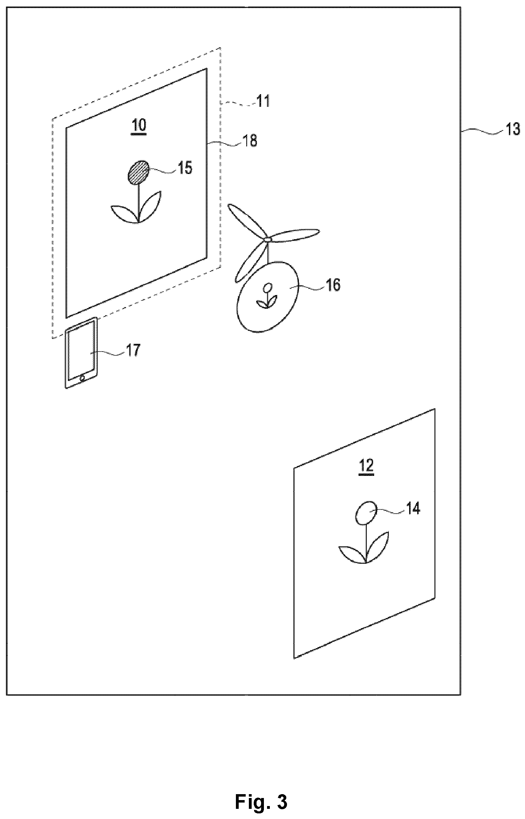

Fig. 3 shows a schematic representation of two field management units 10, 12 in a top view in the form of a display representation 13. In the shown embodiment, sugar beets of different varieties 14, 15 are grown in the field management units 10, 12, which should not cross-pollinate each other (no cross-contamination should occur). Sugar beets (Beta vulgaris) are biennial, cross-pollinated crops. Sugar beets are economically important crops, accounting for 30% of the world's annual sugar production. Sugar beets are harvested in the first year of growth. If seeds are to be harvested for breeding or seed production, the beets are placed in a field management unit the following year to enter the so-called generative phase. A first variety 14 of sugar beet cultivated in the second year in the field management unit 12 is shown as a schematized plant with an empty circle, and a second variety 15 also cultivated in the second year in field management unit 10 is shown as a schematized plant with an inner shaded circle. In the shown constellation, the schematically mobile entities 16, 17 in the form of an aerial drone 16 and in the form of a smartphone 17 are adapted to be used in a method as described herein.

The drone has already flown over field management unit 12 and the smartphone has also been used on the territory of field management unit 12. Both devices could thus carry pollen of variety 14 and are therefore mobile entities that could introduce pollen into another field management unit. At a situation as shown by display 13, the mobile entity 17 in the form of the smartphone falls below a limit distance 11, which is marked by a dashed line and which is only a virtually existing boundary 11, which is set at a minimum distance around the field management unit 10.

The minimum distance 11 has been defined in the present case to be 50 meters. The minimum distance for the field management unit is stored in the database. With the underrun of the distance 11, a warning signal in the form of an acoustic signal and a simultaneous vibration signal is vibration signal is emitted by the smartphone 17. The warning signal can alert the user of terminal device 17 of the imminent pollen contamination of the seed 15 and thereby avoiding entering the field management unit 10 with unwanted pollen from the field management unit 12.

For the mobile entity 16 in the form of the drone, which is steered in the direction of the field management unit 10, but is still 80 m away from the boundary 18 of the field management unit 10, a warning signal for a remote control of the flying drone, which is not shown here, is emitted as soon as the distance between the drone and the field management unit 10 falls below the minimum distance of 50 m.

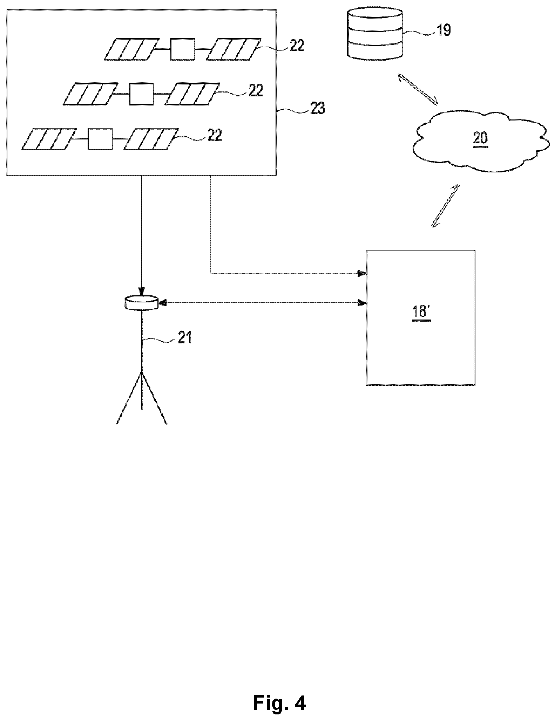

Fig. 4 shows a schematic representation of an example of generating a warning signal for carrying out a method as described herein. The shown system comprises a mobile entity 16' in the form of a smartphone, a database 19 which communicates with the smartphone via the internet 20 and on which, among other things, the position data of the mobile entity 16', the boundaries of the field management units and minimum distances associated with the field management units are stored. Furthermore, it is shown a GNSS base station 21 as a reference station which receives radio waves from the satellites 22 of the satellite system 23 in order to determine its own position and to determine the position of the mobile entity 16'. It is understood that the position of the mobile entity 16' can also be determined and made available to the database in a way other than by GNSS, for example by means of methods known per se such as the use of a cell ID and/or GSM positioning.

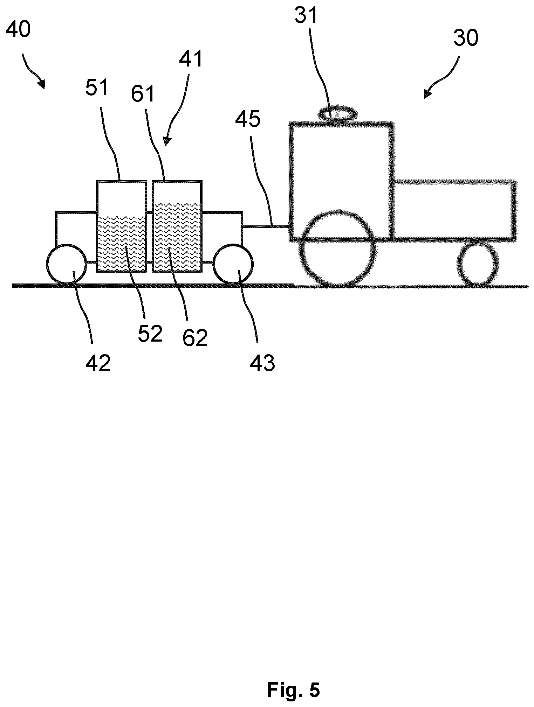

Fig. 5 shows a schematic representation of a mobile entity in the form of a tractor 30, wherein the tractor 30 has a GNSS receiver 31. The tractor 30 is connected to a carrier platform 40 via a connection part 45. The carrier platform has wheels 42, 43 so that it can be carried by the tractor 30 through a field management unit. On the carrier platform, an applicator of substances 41 is arranged. The applicator of substances 41 comprises two containers: a first container 51 in which a first substance 52 is stored, and a second container 61 in which a second substance 62 is stored. The first substance can for example be water and the second substance can for example be a plant protection product. Depending on the required and adverse agricultural interventions that are stored in the database and associated to the current field management unit (i.e. the field management unit in which the tractor 30 and the carrier platform 40 are located in), the applicator of substances can apply the first and/or the second substance to the field management unit and/or lock the first and/or the second container to avoid an application of the first and/or the second substance to the current field management unit.

### List of reference signs

- 10, 12: field management unit
- 11: limit distance
- 13: display representation
- 14: first variety of sugar beets
- 15: second variety of sugar beets
- 16, 17: mobile entity
- 18: boundary of field management unit
- 19: database
- 20: internet
- 21: base station
- 22: satellite
- 23: satellite system
- 30: tractor
- 31: GNSS receiver
- 40: carrier platform
- 41: applicator of substances
- 42, 43: wheels
- 45: connection part
- 51, 61: container
- 52, 62: substance
- 100: method for controlling actions of a mobile entity on a field management unit
- 101: providing a database that is provided on a server
- 102: providing an assessment unit
- 103: determining a current position of a mobile entity
- 104: determining a current field management unit
- 105: determining one or more adjacent field management units
- 105a: storing previous positions of the mobile entity
- 105b: storing field management units, in which the mobile entity was located
- 105c: storing previous positions of the carrier platform
- 105d: storing field management units, in which the carrier platform was located
- 106: neutralising at least one previous position of the mobile entity
- 107: carrying out an assessment
- 108: generating a data signal based on the assessment by the assessment unit
- 109: carrying out an action, dependent on the generated data signal

## Claims

1. A method (100) for controlling actions of a mobile entity on a field management unit, comprising
- providing (101) a database that is provided on a server, wherein georeferenced boundaries of field management units are stored in the database,
- providing (102) an assessment unit, comprising a processor,
- determining (103) a current position of a mobile entity by using a global navigation satellite system (GNSS) receiver for establishing a position of the mobile entity,
- determining (104), by the assessment unit, a current field management unit, in which the mobile entity is located, based on the current position of the mobile entity and based on the georeferenced boundaries of the field management units stored in the database,
- determining (105), by the assessment unit, one or more adjacent field management units, which are arranged adjacent to the current field management unit, based on the current position of the mobile entity and/or on the current field management unit and based on the georeferenced boundaries of the field management units stored in the database,
- wherein at least one of the following characteristics of the mobile entity is stored in the database:
∘ previous positions of the mobile entity and/or previous field management units, in which the mobile entity was located,
∘ agricultural interventions that can be carried out by the mobile entity, wherein the agricultural interventions that can be carried out by the mobile entity include agricultural interventions that are dependent on the previous positions and/or previous field management units,
- wherein at least the following information of the current field management unit and of at least one adjacent field management unit, preferably of all field management units, is stored in the database:
∘ status information of the field management unit,
∘ and at least one of the following:
▪ required agricultural interventions,
▪ adverse agricultural interventions,
- carrying out an assessment (107), by the assessment unit, by assessing whether
a) the mobile entity is adapted to carry out a required agricultural intervention of the current field management unit and/or of an adjacent field management unit, and/or
b) the mobile entity is adapted to carry out an adverse agricultural intervention of the current field management unit and/or of an adjacent field management unit,
by comparing at least one of the stored characteristics of the mobile entity with the information of the current field management unit and/or of an adjacent field management unit,
- generating (108) a data signal based on the assessment by the assessment unit,
wherein the assessment comprises, dependent on:
∘ the adverse agricultural interventions of one of the adjacent field management units, and
∘ the previous positions of the mobile entity and/or the carrier platform and the field management units, in which the mobile entity and/or the carrier platform was previously located,
whether it is allowable for the mobile entity and/or the carrier platform to enter the adjacent field,
wherein in the assessment previous positions of the mobile entity and/or the carrier platform within a predetermined past period of time, in particular within the last 24 hours, are included in the assessment,
- carrying out an action (109), dependent on the generated data signal, with the mobile entity by using a control unit of the mobile entity.

2. The method according to the preceding claim,
- wherein the control unit of the mobile entity is arranged on the mobile entity.

3. The method according to at least one of the preceding claims,
- wherein the status information of the field management unit comprises at least one of the following:
∘ genetics of at least one plant material that is arranged in the field management unit,
∘ blooming status of at least one plant material that is arranged in the field management unit, and/or
- wherein the global navigation satellite system (GNSS) receiver is arranged on the mobile entity, and/or
- wherein the georeferenced boundaries of the current field management unit comprise at least one common point with the georeferenced boundaries of the one or more adjacent field management units.

4. The method according to at least one of the preceding claims,
- wherein the mobile entity comprises a carrier platform, and/or
- wherein the mobile entity and/or the carrier platform comprises or consists of at least one of the following group:
∘ an unmanned vehicle, in particular unmanned aerial vehicle and/or unmanned ground-borne vehicle,
∘ a smartphone,
∘ a tablet,
∘ a wearable sensor,
∘ an agricultural machine, in particular a tractor and/or applicator of substances.

5. The method according to at least one of the preceding claims, comprising
- storing (105a), in the database, previous positions of the mobile entity, and/or
- storing (105b), in the database, field management units, in which the mobile entity was previously located, and/or
- storing (105c), in the database, previous positions of the carrier platform, and/or
- storing (105d), in the database, field management units, in which the carrier platform was previously located.

6. The method according to at least one of the preceding claims, comprising
- neutralising (106) at least one previous position of the mobile entity and/or the carrier platform dependent on the presence of a neutralising event,
- wherein preferably in the assessment neutralised previous positions of the mobile entity and/or the carrier platform are not considered in the assessment,
- wherein preferably the neutralising event comprises cleaning the mobile entity and/or the carrier platform.

7. The method according to at least one of the preceding claims, comprising
- if an adverse agricultural intervention is caused by the mobile entity and/or the carrier platform, storing, in the database, an occurrence and/or a timestamp of the adverse agricultural intervention.

8. The method according to at least one of the preceding claims,
- wherein required agricultural interventions of the current field management unit and/or at least one of the adjacent field management units and/or adverse agricultural interventions of the current field management unit and/or at least one of the adjacent field management units comprise at least one of the following group:
∘ introducing at least one substance to the field management unit, wherein preferably the substance comprises at least one of the following group: pollen, water, plant protection product, fertilizer, plant material, weeds,
∘ amending at least one plant condition and/or at least one soil condition, wherein preferably amending the at least one plant condition and/or at least one soil condition comprises at least one of the following group: tilling, harvesting, grubbing.

9. The method according to at least one of the preceding claims,
- wherein the mobile entity comprises an applicator of substances which comprises a first container and preferably a second container,
- wherein preferably, dependent on the generated data signal, the first container is locked and/or the second container is locked.

10. The method according to at least one of the preceding claims,
- wherein required agricultural interventions of the current field management unit and/or required agricultural interventions of at least one of the adjacent field management units comprise at least one of the following group:
∘ watering the field management unit,
∘ applying a plant protection product, in particular a pesticide and/or a fungicide and/or a herbicide, in the field management unit,
∘ tillage operations in the field management unit,
∘ harvesting in the field management unit,
∘ planting plant material in the field management unit.

11. The method according to at least one of the preceding claims,
- wherein adverse agricultural interventions of the current field management unit and/or adverse agricultural interventions of at least one of the adjacent field management units comprises at least one of the following group:
∘ watering the management unit,
∘ applying a plant protection product, in particular pesticide and/or fungicide and/or herbicide, in the field management unit,
∘ tillage operations in the field management unit,
∘ harvesting in the field management unit,
∘ planting plant material in the field management unit,
∘ crossing the georeferenced boundaries of the field management unit dependent on previous positions of the mobile entity and/or previous field management units, in which the mobile entity was located,
∘ reaching a pre-defined distance between the mobile entity and the georeferenced boundaries of the field management unit,
∘ crossing georeferenced boundaries of a no-go area,
∘ unwanted cross-pollination, in particular human-induced pollination.

12. A mobile entity, comprising
- a control unit that is adapted to control the mobile entity to carry out an action, dependent on a generated data signal that is determined by the method according to at least one of the preceding claims.

13. System for controlling actions of a mobile entity on a field management unit, comprising
- a database that is provided on a server, wherein georeferenced boundaries of field management units are stored in the database,
- a mobile entity,
- a global navigation satellite system (GNSS) receiver for establishing a position of the mobile entity, wherein the global navigation satellite system (GNSS) receiver is adapted to determine a current position of the mobile entity,
- an assessment unit, comprising a processor, wherein the assessment unit is adapted to
∘ determine a current field management unit, in which the mobile entity is located, based on the current position of the mobile entity and based on the georeferenced boundaries of the field management units stored in the database,
∘ determine one or more adjacent field management units, which are arranged adjacent to the current field management unit, based on the current position of the mobile entity and/or on the current field management unit and based on the georeferenced boundaries of the field management units stored in the database,
- wherein at least one of the following characteristics of the mobile entity is stored in the database:
∘ previous positions of the mobile entity and/or previous field management units, in which the mobile entity was located,
∘ agricultural interventions that can be carried out by the mobile entity, wherein the agricultural interventions that can be carried out by the mobile entity include agricultural interventions that are dependent on the previous positions and/or previous field management units,
- wherein at least the following information of the current field management unit and of at least one adjacent field management unit, preferably of all field management units, is stored in the database:
∘ status information of the field management unit,
∘ and at least one of the following:
▪ required agricultural interventions,
▪ adverse agricultural interventions,
- wherein the assessment unit is adapted to carry out an assessment by assessing whether
a) the mobile entity is adapted to carry out a required agricultural intervention of the current field management unit and/or of an adjacent field management unit, and/or
b) the mobile entity is adapted to carry out an adverse agricultural intervention of the current field management unit and/or of an adjacent field management unit,
by comparing at least one of the stored characteristics of the mobile entity with the information of the current field management unit and/or of an adjacent field management unit,
wherein the assessment unit is adapted to generate a data signal based on the assessment by the assessment unit,
wherein the assessment unit is adapted to assess, dependent on:
∘ the adverse agricultural interventions of one of the adjacent field management units, and
∘ the previous positions of the mobile entity and/or the carrier platform and the field management units, in which the mobile entity and/or the carrier platform was previously located,
whether it is allowable for the mobile entity and/or the carrier platform to enter the adjacent field,
wherein in the assessment previous positions of the mobile entity and/or the carrier platform within a predetermined past period of time, in particular within the last 24 hours, are included in the assessment,
wherein the mobile entity is adapted to carry out an action, dependent on the generated data signal, with the mobile entity by using a control unit of the mobile entity.

14. A computer program product comprising instructions, which, when the program is executed by a computer, cause the mobile entity to carry out the method of at least one of the preceding claims 1-11 and to start a required agricultural intervention and/or to stop an adverse agricultural intervention.

15. Use of the method according to at least one of the preceding claims 1-11 for preventing adverse agricultural interventions, in particular human-induced pollination.

## Patentansprüche

1. Verfahren (100) zum Steuern von Aktionen einer mobilen Einheit auf einer Feldmanagementeinheit, umfassend
- Bereitstellen (101) einer Datenbank, die auf einem Server bereitgestellt wird, wobei georeferenzierte Grenzen von Feldmanagementeinheiten in der Datenbank gespeichert sind,
- Bereitstellen (102) einer Bewertungseinheit, umfassend einen Prozessor,
- Ermitteln (103) einer aktuellen Position einer mobilen Einheit unter Verwendung eines Globalen Navigationssatellitensystem-(GNSS-)Empfängers zum Ermitteln einer Position der mobilen Einheit,
- Ermitteln (104), durch die Bewertungseinheit, einer aktuellen Feldmanagementeinheit, in der sich die mobile Einheit befindet, basierend auf der aktuellen Position der mobilen Einheit und basierend auf den in der Datenbank gespeicherten georeferenzierten Grenzen der Feldmanagementeinheiten,
- Ermitteln (105), durch die Bewertungseinheit, einer oder mehrerer benachbarter Feldmanagementeinheiten, die benachbart zur aktuellen Feldmanagementeinheit angeordnet sind, basierend auf der aktuellen Position der mobilen Einheit und/oder auf der aktuellen Feldmanagementeinheit und basierend auf den in der Datenbank gespeicherten georeferenzierten Grenzen der Feldmanagementeinheiten,
- wobei mindestens eines der folgenden Merkmale der mobilen Einheit in der Datenbank gespeichert ist:
∘ frühere Positionen der mobilen Einheit und/oder frühere Feldmanagementeinheiten, in denen sich die mobile Einheit befand,
∘ landwirtschaftliche Maßnahmen, die von der mobilen Einheit durchgeführt werden können, wobei die landwirtschaftlichen Maßnahmen, die von der mobilen Einheit durchgeführt werden können, landwirtschaftliche Maßnahmen umfassen, die von den früheren Positionen und/oder früheren Feldmanagementeinheiten abhängig sind,
- wobei mindestens die folgenden Informationen der aktuellen Feldmanagementeinheit und mindestens einer benachbarten Feldmanagementeinheit, vorzugsweise aller Feldmanagementeinheiten, in der Datenbank gespeichert sind:
∘ Statusinformationen der Feldmanagementeinheit,
∘ und mindestens eines der Folgenden:
▪ erforderliche landwirtschaftliche Maßnahmen,
▪ nachteilige landwirtschaftliche Maßnahmen,
- Durchführen einer Bewertung (107), durch die Bewertungseinheit, durch Beurteilen, ob
a) die mobile Einheit ausgebildet ist, eine erforderliche landwirtschaftliche Maßnahme der aktuellen Feldmanagementeinheit und/oder einer benachbarten Feldmanagementeinheit durchzuführen, und/oder
b) die mobile Einheit ausgebildet ist, eine nachteilige landwirtschaftliche Maßnahme der aktuellen Feldmanagementeinheit und/oder einer benachbarten Feldmanagementeinheit durchzuführen,
durch Vergleichen mindestens eines der gespeicherten Merkmale der mobilen Einheit mit den Informationen der aktuellen Feldmanagementeinheit und/oder einer benachbarten Feldmanagementeinheit,
- Erzeugen (108) eines Datensignals basierend auf der Bewertung durch die Bewertungseinheit,
wobei die Bewertung umfasst, abhängig von:
∘ den nachteiligen landwirtschaftlichen Maßnahmen einer der benachbarten Feldmanagementeinheiten, und
∘ den früheren Positionen der mobilen Einheit und/oder der Trägerplattform und den Feldmanagementeinheiten, in denen sich die mobile Einheit und/oder die Trägerplattform zuvor befand,
ob es der mobilen Einheit und/oder der Trägerplattform erlaubt ist, das benachbarte Feld zu betreten,
wobei bei der Bewertung frühere Positionen der mobilen Einheit und/oder der Trägerplattform innerhalb eines vorher festgelegten vergangenen Zeitraums, insbesondere innerhalb der letzten 24 Stunden, in die Bewertung einbezogen werden,
- Durchführen einer Aktion (109), abhängig von dem erzeugten Datensignal, mit der mobilen Einheit unter Verwendung einer Steuereinheit der mobilen Einheit.

2. Verfahren gemäß dem vorhergehenden Anspruch,
- wobei die Steuereinheit der mobilen Einheit an der mobilen Einheit angeordnet ist.

3. Verfahren gemäß mindestens einem der vorhergehenden Ansprüche,
- wobei die Statusinformationen der Feldmanagementeinheit mindestens eines der Folgenden umfassen:
∘ Genetik mindestens eines Pflanzenmaterials, das in der Feldmanagementeinheit angeordnet ist,
∘ Blühstatus mindestens eines Pflanzenmaterials, das in der Feldmanagementeinheit angeordnet ist, und/oder
- wobei der Globale Navigationssatellitensystem-(GNSS-)Empfänger an der mobilen Einheit angeordnet ist, und/oder
- wobei die georeferenzierten Grenzen der aktuellen Feldmanagementeinheit mindestens einen gemeinsamen Punkt mit den georeferenzierten Grenzen der einen oder mehreren benachbarten Feldmanagementeinheiten aufweisen.

4. Verfahren gemäß mindestens einem der vorhergehenden Ansprüche,
- wobei die mobile Einheit eine Trägerplattform umfasst, und/oder
- wobei die mobile Einheit und/oder die Trägerplattform mindestens eines der folgenden Gruppe umfasst oder daraus besteht:
∘ ein unbemanntes Fahrzeug, insbesondere ein unbemanntes Luftfahrzeug und/oder ein unbemanntes Bodenfahrzeug,
∘ ein Smartphone,
∘ ein Tablet,
∘ ein tragbarer Sensor,
∘ eine Landmaschine, insbesondere ein Traktor und/oder eine Ausbringvorrichtung für Substanzen.

5. Verfahren gemäß mindestens einem der vorhergehenden Ansprüche, umfassend
- Speichern (105a), in der Datenbank, früherer Positionen der mobilen Einheit, und/oder
- Speichern (105b), in der Datenbank, von Feldmanagementeinheiten, in denen sich die mobile Einheit zuvor befand, und/oder
- Speichern (105c), in der Datenbank, früherer Positionen der Trägerplattform, und/oder
- Speichern (105d), in der Datenbank, von Feldmanagementeinheiten, in denen sich die Trägerplattform zuvor befand.

6. Verfahren gemäß mindestens einem der vorhergehenden Ansprüche, umfassend
- Neutralisieren (106) mindestens einer früheren Position der mobilen Einheit und/oder der Trägerplattform abhängig von dem Vorhandensein eines Neutralisierungsereignisses,
- wobei vorzugsweise bei der Bewertung neutralisierte frühere Positionen der mobilen Einheit und/oder der Trägerplattform in der Bewertung nicht berücksichtigt werden,
- wobei vorzugsweise das Neutralisierungsereignis das Reinigen der mobilen Einheit und/oder der Trägerplattform umfasst.

7. Verfahren gemäß mindestens einem der vorhergehenden Ansprüche, umfassend
- falls eine nachteilige landwirtschaftliche Maßnahme durch die mobile Einheit und/oder die Trägerplattform verursacht wird, Speichern, in der Datenbank, eines Auftretens und/oder eines Zeitstempels der nachteiligen landwirtschaftlichen Maßnahme.

8. Verfahren gemäß mindestens einem der vorhergehenden Ansprüche,
- wobei erforderliche landwirtschaftliche Maßnahmen der aktuellen Feldmanagementeinheit und/oder mindestens einer der benachbarten Feldmanagementeinheiten und/oder nachteilige landwirtschaftliche Maßnahmen der aktuellen Feldmanagementeinheit und/oder mindestens einer der benachbarten Feldmanagementeinheiten mindestens eines der folgenden Gruppe umfassen:
∘ Einbringen mindestens einer Substanz in die Feldmanagementeinheit, wobei vorzugsweise die Substanz mindestens eines der folgenden Gruppe umfasst: Pollen, Wasser, Pflanzenschutzmittel, Düngemittel, Pflanzenmaterial, Unkraut,
∘ Ändern mindestens eines Pflanzenzustands und/oder mindestens eines Bodenzustands, wobei vorzugsweise das Ändern des mindestens einen Pflanzenzustands und/oder des mindestens einen Bodenzustands mindestens eines der folgenden Gruppe umfasst: Bodenbearbeitung, Ernte, Roden.

9. Verfahren gemäß mindestens einem der vorhergehenden Ansprüche,
- wobei die mobile Einheit eine Ausbringvorrichtung für Substanzen umfasst, die einen ersten Behälter und vorzugsweise einen zweiten Behälter umfasst,
- wobei vorzugsweise, abhängig von dem erzeugten Datensignal, der erste Behälter gesperrt ist und/oder der zweite Behälter gesperrt ist.

10. Verfahren gemäß mindestens einem der vorhergehenden Ansprüche,
- wobei erforderliche landwirtschaftliche Maßnahmen der aktuellen Feldmanagementeinheit und/oder erforderliche landwirtschaftliche Maßnahmen mindestens einer der benachbarten Feldmanagementeinheiten mindestens eines der folgenden Gruppe umfassen:
∘ Bewässerung der Feldmanagementeinheit,
∘ Ausbringen eines Pflanzenschutzmittels, insbesondere eines Pestizids und/oder eines Fungizids und/oder eines Herbizids, in der Feldmanagementeinheit,
∘ Bodenbearbeitungsmaßnahmen in der Feldmanagementeinheit,
∘ Ernte in der Feldmanagementeinheit,
∘ Pflanzen von Pflanzenmaterial in der Feldmanagementeinheit.

11. Verfahren gemäß mindestens einem der vorhergehenden Ansprüche,
- wobei nachteilige landwirtschaftliche Maßnahmen der aktuellen Feldmanagementeinheit und/oder nachteilige landwirtschaftliche Maßnahmen mindestens einer der benachbarten Feldmanagementeinheiten mindestens eines der folgenden Gruppe umfassen:
∘ Bewässerung der Managementeinheit,
∘ Ausbringen eines Pflanzenschutzmittels, insbesondere eines Pestizids und/oder eines Fungizids und/oder eines Herbizids, in der Feldmanagementeinheit,
∘ Bodenbearbeitungsmaßnahmen in der Feldmanagementeinheit,
∘ Ernte in der Feldmanagementeinheit,
∘ Pflanzen von Pflanzenmaterial in der Feldmanagementeinheit,
∘ Überqueren der georeferenzierten Grenzen der Feldmanagementeinheit abhängig von früheren Positionen der mobilen Einheit und/oder früheren Feldmanagementeinheiten, in denen sich die mobile Einheit befand,
∘ Erreichen eines vordefinierten Abstands zwischen der mobilen Einheit und den georeferenzierten Grenzen der Feldmanagementeinheit,
∘ Überqueren georeferenzierter Grenzen einer Sperrzone,
∘ ungewollte Fremdbestäubung, insbesondere menschlich induzierte Bestäubung.

12. Mobile Einheit, umfassend
- eine Steuereinheit, die dazu ausgebildet ist, die mobile Einheit zu steuern, um eine Aktion durchzuführen, abhängig von einem erzeugten Datensignal, das durch das Verfahren gemäß mindestens einem der vorhergehenden Ansprüche ermittelt wird.

13. System zum Steuern von Aktionen einer mobilen Einheit auf einer Feldmanagementeinheit, umfassend
- eine Datenbank, die auf einem Server bereitgestellt wird, wobei georeferenzierte Grenzen von Feldmanagementeinheiten in der Datenbank gespeichert sind,
- eine mobile Einheit,
- einen Globalen Navigationssatellitensystem-(GNSS-)Empfänger zum Ermitteln einer Position der mobilen Einheit, wobei der Globale Navigationssatellitensystem-(GNSS-)Empfänger ausgebildet ist, eine aktuelle Position der mobilen Einheit zu ermitteln,
- eine Bewertungseinheit, umfassend einen Prozessor, wobei die Bewertungseinheit ausgebildet ist,
∘ eine aktuelle Feldmanagementeinheit, in der sich die mobile Einheit befindet, zu ermitteln, basierend auf der aktuellen Position der mobilen Einheit und basierend auf den in der Datenbank gespeicherten georeferenzierten Grenzen der Feldmanagementeinheiten,
∘ eine oder mehrere benachbarte Feldmanagementeinheiten, die benachbart zur aktuellen Feldmanagementeinheit angeordnet sind, zu ermitteln, basierend auf der aktuellen Position der mobilen Einheit und/oder auf der aktuellen Feldmanagementeinheit und basierend auf den in der Datenbank gespeicherten georeferenzierten Grenzen der Feldmanagementeinheiten,
- wobei mindestens eines der folgenden Merkmale der mobilen Einheit in der Datenbank gespeichert ist:
∘ frühere Positionen der mobilen Einheit und/oder frühere Feldmanagementeinheiten, in denen sich die mobile Einheit befand,
∘ landwirtschaftliche Maßnahmen, die von der mobilen Einheit durchgeführt werden können, wobei die landwirtschaftlichen Maßnahmen, die von der mobilen Einheit durchgeführt werden können, landwirtschaftliche Maßnahmen umfassen, die von den früheren Positionen und/oder früheren Feldmanagementeinheiten abhängig sind,
- wobei mindestens die folgenden Informationen der aktuellen Feldmanagementeinheit und mindestens einer benachbarten Feldmanagementeinheit, vorzugsweise aller Feldmanagementeinheiten, in der Datenbank gespeichert sind:
∘ Statusinformationen der Feldmanagementeinheit,
∘ und mindestens eines der Folgenden:
▪ erforderliche landwirtschaftliche Maßnahmen,
▪ nachteilige landwirtschaftliche Maßnahmen,
- wobei die Bewertungseinheit ausgebildet ist, eine Bewertung durchzuführen, durch Beurteilen, ob
a) die mobile Einheit ausgebildet ist, eine erforderliche landwirtschaftliche Maßnahme der aktuellen Feldmanagementeinheit und/oder einer benachbarten Feldmanagementeinheit durchzuführen, und/oder
b) die mobile Einheit ausgebildet ist, eine nachteilige landwirtschaftliche Maßnahme der aktuellen Feldmanagementeinheit und/oder einer benachbarten Feldmanagementeinheit durchzuführen,
durch Vergleichen mindestens eines der gespeicherten Merkmale der mobilen Einheit mit den Informationen der aktuellen Feldmanagementeinheit und/oder einer benachbarten Feldmanagementeinheit,
wobei die Bewertungseinheit ausgebildet ist, ein Datensignal basierend auf der Bewertung durch die Bewertungseinheit zu erzeugen,
wobei die Bewertungseinheit ausgebildet ist, abhängig von:
∘ den nachteiligen landwirtschaftlichen Maßnahmen einer der benachbarten Feldmanagementeinheiten, und
∘ den früheren Positionen der mobilen Einheit und/oder der Trägerplattform und den Feldmanagementeinheiten, in denen sich die mobile Einheit und/oder die Trägerplattform zuvor befand,
zu beurteilen, ob es der mobilen Einheit und/oder der Trägerplattform erlaubt ist, das benachbarte Feld zu betreten,
wobei bei der Bewertung frühere Positionen der mobilen Einheit und/oder der Trägerplattform innerhalb eines vorher festgelegten vergangenen Zeitraums, insbesondere innerhalb der letzten 24 Stunden, in die Bewertung einbezogen werden,
wobei die mobile Einheit ausgebildet ist, eine Aktion, abhängig von dem erzeugten Datensignal, mit der mobilen Einheit unter Verwendung einer Steuereinheit der mobilen Einheit durchzuführen.

14. Computerprogrammprodukt, umfassend Anweisungen, die, wenn das Programm durch einen Computer ausgeführt wird, die mobile Einheit veranlassen, das Verfahren gemäß mindestens einem der vorhergehenden Ansprüche 1-11 durchzuführen und eine erforderliche landwirtschaftliche Maßnahme zu starten und/oder eine nachteilige landwirtschaftliche Maßnahme zu stoppen.

15. Verwendung des Verfahrens gemäß mindestens einem der vorhergehenden Ansprüche 1-11 zur Verhinderung nachteiliger landwirtschaftlicher Maßnahmen, insbesondere menschlich induzierter Bestäubung.

## Revendications

1. Procédé (100) de commande d'actions d'une entité mobile sur une unité de gestion de champ, comprenant
- la fourniture (101) d'une base de données qui est fournie sur un serveur, dans lequel des limites géoréférencées d'unités de gestion de champ sont stockées dans la base de données,
- la fourniture (102) d'une unité d'évaluation, comprenant un processeur,
- la détermination (103) d'une position actuelle d'une entité mobile à l'aide d'un récepteur de système mondial de navigation par satellite (GNSS) pour l'établissement d'une position de l'entité mobile,
- la détermination (104), par l'unité d'évaluation, d'une unité de gestion de champ actuelle, dans laquelle l'entité mobile est située, sur la base de la position actuelle de l'entité mobile et sur la base des limites géoréférencées des unités de gestion de champ stockées dans la base de données,
- la détermination (105), par l'unité d'évaluation, d'une ou plusieurs unités de gestion de champ adjacentes, lesquelles sont agencées de manière adjacente à l'unité de gestion de champ actuelle, sur la base de la position actuelle de l'entité mobile et/ou de l'unité de gestion de champ actuelle et sur la base des limites géoréférencées des unités de gestion de champ stockées dans la base de données,
- dans lequel au moins une des caractéristiques suivantes de l'entité mobile est stockée dans la base de données :
∘ des positions précédentes de l'entité mobile et/ou des unités de gestion de champ précédentes, dans lesquelles l'entité mobile était située,
∘ des interventions agricoles qui peuvent être effectuées par l'entité mobile, dans lequel les interventions agricoles qui peuvent être effectuées par l'entité mobile comportent des interventions agricoles qui sont dépendantes des positions précédentes et/ou des unités de gestion de champ précédentes,
- dans lequel au moins les informations suivantes de l'unité de gestion de champ actuelle et d'au moins une unité de gestion de champ adjacente, de préférence de toutes les unités de gestion de champ, sont stockées dans la base de données :
∘ des informations de statut de l'unité de gestion de champ,
∘ et au moins un des éléments suivants :
• des interventions agricoles requises,
• des interventions agricoles néfastes,
- la réalisation d'une évaluation (107), par l'unité d'évaluation, par évaluation du fait si
a) l'entité mobile est adaptée pour effectuer une intervention agricole requise de l'unité de gestion de champ actuelle et/ou d'une unité de gestion de champ adjacente, et/ou
b) l'entité mobile est adaptée pour effectuer une intervention agricole néfaste de l'unité de gestion de champ actuelle et/ou d'une unité de gestion de champ adjacente,
par comparaison d'au moins une des caractéristiques stockées de l'entité mobile avec les informations de l'unité de gestion de champ actuelle et/ou d'une unité de gestion de champ adjacente,
- la génération (108) d'un signal de données sur la base de l'évaluation par l'unité d'évaluation,
dans lequel l'évaluation comprend, en fonction :
∘ des interventions agricoles néfastes d'une des unités de gestion de champ adjacentes, et
∘ des positions précédentes de l'entité mobile et/ou de la plateforme porteuse et des unités de gestion de champ, dans lesquelles l'entité mobile et/ou la plateforme porteuse était située précédemment,
le fait de savoir s'il est admissible pour l'entité mobile et/ou la plateforme porteuse d'entrer dans le champ adjacent,
dans lequel dans l'évaluation, des positions précédentes de l'entité mobile et/ou de la plateforme porteuse dans une période de temps passée prédéterminée, en particulier dans les 24 dernières heures, sont incluses dans l'évaluation,
- la réalisation d'une action (109), en fonction du signal de données généré, avec l'entité mobile à l'aide d'une unité de commande de l'entité mobile.

2. Procédé selon la revendication précédente,
- dans lequel l'unité de commande de l'entité mobile est agencée sur l'entité mobile.

3. Procédé selon au moins l'une des revendications précédentes,
- dans lequel les informations de statut de l'unité de gestion de champ comprennent au moins un des éléments suivants:
∘ la génétique d'au moins un matériel végétal qui est agencé dans l'unité de gestion de champ,
∘ l'état de floraison d'au moins un matériel végétal qui est agencé dans l'unité de gestion de champ, et/ou
- dans lequel le récepteur de système mondial de navigation par satellite (GNSS) est agencé sur l'entité mobile, et/ou
- dans lequel les limites géoréférencées de l'unité de gestion de champ actuelle comprennent au moins un point commun avec les limites géoréférencées des une ou plusieurs unités de gestion de champ adjacentes.

4. Procédé selon au moins l'une des revendications précédentes,
- dans lequel l'entité mobile comprend une plateforme porteuse, et/ou
- dans lequel l'entité mobile et/ou la plateforme porteuse comprend ou est constituée d'au moins un élément du groupe suivant :
∘ un véhicule sans pilote, en particulier véhicule aérien sans pilote et/ou véhicule terrestre sans pilote,
∘ un téléphone intelligent,
∘ une tablette,
∘ un capteur portable,
∘ une machine agricole, en particulier un tracteur et/ou applicateur de substances.

5. Procédé selon au moins l'une des revendications précédentes, comprenant
- le stockage (105a), dans la base de données, de positions précédentes de l'entité mobile, et/ou
- le stockage (105b), dans la base de données, d'unités de gestion de champ, dans lesquelles l'entité mobile était située précédemment, et/ou
- le stockage (105c), dans la base de données, de positions précédentes de la plateforme porteuse, et/ou
- le stockage (105d), dans la base de données, d'unités de gestion de champ, dans lesquelles la plateforme porteuse était située précédemment.

6. Procédé selon au moins l'une des revendications précédentes, comprenant
- la neutralisation (106) d'au moins une position précédente de l'entité mobile et/ou de la plateforme porteuse en fonction de la présence d'un événement neutralisant,
- dans lequel de préférence dans l'évaluation, des positions précédentes neutralisées de l'entité mobile et/ou de la plateforme porteuse ne sont pas prises en compte dans l'évaluation,
- dans lequel de préférence l'événement neutralisant comprend le nettoyage de l'entité mobile et/ou de la plateforme porteuse.

7. Procédé selon au moins l'une des revendications précédentes, comprenant
- si une intervention agricole néfaste est provoquée par l'entité mobile et/ou la plateforme porteuse, le stockage, dans la base de données, d'une occurrence et/ou d'un horodatage de l'intervention agricole néfaste.

8. Procédé selon au moins l'une des revendications précédentes,
- dans lequel des interventions agricoles requises de l'unité de gestion de champ actuelle et/ou d'au moins une des unités de gestion de champ adjacentes et/ou des interventions agricoles néfastes de l'unité de gestion de champ actuelle et/ou d'au moins une des unités de gestion de champ adjacentes comprennent au moins un élément du groupe suivant :
∘ l'introduction d'au moins une substance dans l'unité de gestion de champ, dans lequel de préférence la substance comprend au moins un élément du groupe suivant : pollen, eau, produit phytosanitaire, engrais, matériel végétal, mauvaises herbes,
∘ la modification d'au moins une condition de plante et/ou d'au moins une condition de sol, dans lequel de préférence la modification de l'au moins une condition de plante et/ou au moins une condition de sol comprend au moins un élément du groupe suivant : labour, récolte, arrachage.

9. Procédé selon au moins l'une des revendications précédentes,
- dans lequel l'entité mobile comprend un applicateur de substances lequel comprend un premier conteneur et de préférence un deuxième conteneur,
- dans lequel de préférence, en fonction du signal de données généré, le premier conteneur est verrouillé et/ou le deuxième conteneur est verrouillé.

10. Procédé selon au moins l'une des revendications précédentes,
- dans lequel des interventions agricoles requises de l'unité de gestion de champ actuelle et/ou des interventions agricoles requises d'au moins une des unités de gestion de champ adjacentes comprennent au moins un élément du groupe suivant :
∘ l'arrosage de l'unité de gestion de champ,
∘ l'application d'un produit phytosanitaire, en particulier d'un pesticide et/ou d'un fongicide et/ou d'un herbicide, dans l'unité de gestion de champ,
∘ les opérations de labour dans l'unité de gestion de champ,
∘ la récolte dans l'unité de gestion de champ,
∘ la plantation de matériel végétal dans l'unité de gestion de champ.

11. Procédé selon au moins l'une des revendications précédentes,
- dans lequel des interventions agricoles néfastes de l'unité de gestion de champ actuelle et/ou des interventions agricoles néfastes d'au moins une des unités de gestion de champ adjacentes comprennent au moins un élément du groupe suivant :
∘ l'arrosage de l'unité de gestion,
∘ l'application d'un produit phytosanitaire, en particulier pesticide et/ou fongicide et/ou herbicide, dans l'unité de gestion de champ,
∘ les opérations de labour dans l'unité de gestion de champ,
∘ la récolte dans l'unité de gestion de champ,
∘ la plantation de matériel végétal dans l'unité de gestion de champ,
∘ le franchissement des limites géoréférencées de l'unité de gestion de champ en fonction de positions précédentes de l'entité mobile et/ou d'unités de gestion de champ précédentes, dans lesquelles l'entité mobile était située,
∘ l'atteinte d'une distance prédéfinie entre l'entité mobile et les limites géoréférencées de l'unité de gestion de champ,
∘ le franchissement de limites géoréférencées d'une zone interdite,
∘ la pollinisation croisée indésirable, en particulier la pollinisation induite par l'homme.

12. Entité mobile, comprenant
- une unité de commande qui est adaptée pour commander l'entité mobile pour effectuer une action, en fonction d'un signal de données généré qui est déterminé par le procédé selon au moins l'une des revendications précédentes.

13. Système de commande d'actions d'une entité mobile sur une unité de gestion de champ, comprenant
- une base de données qui est fournie sur un serveur, dans lequel des limites géoréférencées d'unités de gestion de champ sont stockées dans la base de données,
- une entité mobile,
- un récepteur de système mondial de navigation par satellite (GNSS) pour l'établissement d'une position de l'entité mobile, dans lequel le récepteur de système mondial de navigation par satellite (GNSS) est adapté pour déterminer une position actuelle de l'entité mobile,
- une unité d'évaluation, comprenant un processeur, dans lequel l'unité d'évaluation est adaptée pour
∘ déterminer une unité de gestion de champ actuelle, dans laquelle l'entité mobile est située, sur la base de la position actuelle de l'entité mobile et sur la base des limites géoréférencées des unités de gestion de champ stockées dans la base de données,
∘ déterminer une ou plusieurs unités de gestion de champ adjacentes, lesquelles sont agencées de manière adjacente à l'unité de gestion de champ actuelle, sur la base de la position actuelle de l'entité mobile et/ou de l'unité de gestion de champ actuelle et sur la base des limites géoréférencées des unités de gestion de champ stockées dans la base de données,
- dans lequel au moins une des caractéristiques suivantes de l'entité mobile est stockée dans la base de données :
∘ des positions précédentes de l'entité mobile et/ou des unités de gestion de champ précédentes, dans lesquelles l'entité mobile était située,
∘ des interventions agricoles qui peuvent être effectuées par l'entité mobile, dans lequel les interventions agricoles qui peuvent être effectuées par l'entité mobile comportent des interventions agricoles qui sont dépendantes des positions précédentes et/ou des unités de gestion de champ précédentes,
- dans lequel au moins les informations suivantes de l'unité de gestion de champ actuelle et d'au moins une unité de gestion de champ adjacente, de préférence de toutes les unités de gestion de champ, sont stockées dans la base de données :
∘ des informations de statut de l'unité de gestion de champ,
∘ et au moins un des éléments suivants :
• des interventions agricoles requises,
• des interventions agricoles néfastes,
- dans lequel l'unité d'évaluation est adaptée pour effectuer une évaluation par évaluation du fait si
a) l'entité mobile est adaptée pour effectuer une intervention agricole requise de l'unité de gestion de champ actuelle et/ou d'une unité de gestion de champ adjacente, et/ou
b) l'entité mobile est adaptée pour effectuer une intervention agricole néfaste de l'unité de gestion de champ actuelle et/ou d'une unité de gestion de champ adjacente,
par comparaison d'au moins une des caractéristiques stockées de l'entité mobile avec les informations de l'unité de gestion de champ actuelle et/ou d'une unité de gestion de champ adjacente,
dans lequel l'unité d'évaluation est adaptée pour générer un signal de données sur la base de l'évaluation par l'unité d'évaluation,
dans lequel l'unité d'évaluation est adaptée pour évaluer, en fonction :
∘ des interventions agricoles néfastes d'une des unités de gestion de champ adjacentes, et
∘ des positions précédentes de l'entité mobile et/ou de la plateforme porteuse et des unités de gestion de champ, dans lesquelles l'entité mobile et/ou la plateforme porteuse était située précédemment,
s'il est admissible pour l'entité mobile et/ou la plateforme porteuse d'entrer dans le champ adjacent,
dans lequel dans l'évaluation, des positions précédentes de l'entité mobile et/ou de la plateforme porteuse dans une période de temps passée prédéterminée, en particulier dans les 24 dernières heures, sont incluses dans l'évaluation,
dans lequel l'entité mobile est adaptée pour effectuer une action, en fonction du signal de données généré, avec l'entité mobile à l'aide d'une unité de commande de l'entité mobile.

14. Produit de programme informatique comprenant des instructions, lesquelles, lorsque le programme est exécuté par un ordinateur, amènent l'entité mobile à effectuer le procédé selon au moins l'une des revendications précédentes 1-11 et à démarrer une intervention agricole requise et/ou à arrêter une intervention agricole néfaste.

15. Utilisation du procédé selon au moins l'une des revendications précédentes 1-11 pour la prévention d'interventions agricoles néfastes, en particulier la pollinisation induite par l'homme.
